# EUROPEAN PATENT APPLICATION

(11) **EP 2 000 355 A1**
(43) Date of publication of application: **10.12.2008**
(21) Application number: 07109774.5
(22) Date of filing: 07.06.2007
(51) Int. Cl.: B60N 2/58

(54) **Vehicle seat**

(71) Applicant: IEE INTERNATIONAL ELECTRONICS & ENGINEERING S.A., 6468 Echternach (LU)
(72) Inventor: Scheckenbach, Ingrid, 54668 Ferschweiler (DE); Kedenburg, Claus-Christian, 54329 Konz (DE)
(74) Representative: Beissel, Jean

(57) **Abstract**

The upholstered seat element of a vehicle seat includes a cushion (26), a trim cover (24) fixed to the cushion along an attachment seam and an integrally formed planar textile electrode extending substantially parallel to the trim cover, the textile electrode being formed of interwoven conductive fibres. The electrode (10) comprises a first electrode region arranged on one side of the attachment seam, a second electrode region arranged on the other side of the attachment seam and a transition region connecting the first electrode region to the second electrode region where the electrode overlaps with the attachment seam. The electrode comprises, in the transition region, only such conductive fibres that extend from the transition region into at most one of the first and second electrode regions, so that, in response to stress acting along a direction across the attachment seam, those conductive fibres extending from the transition region only into the first electrode region may be shifted with respect to those conductive fibres extending from the transition region only into the second electrode region, thereby enabling an elongation of the transition region in the direction of the stress.

## Description

### Technical field

The present invention generally relates to a seat for an automotive vehicle, in particular to the arrangement of a woven textile electrode within such a seat.

### Background Art

A vehicle seat includes, in general, upholstered seat elements (seating portion and backrest) and a frame supporting the seat elements and mounting them to the vehicle. An upholstered seat element comprises a cushion and trim material (e.g. textile, genuine or artificial leather, and the like) covering the cushion and providing a durable outer surface for contact with a seat occupant. Typically, the cushion is made from an expandable foam material, such as a polymer (e.g. polyurethane), and moulded to a predetermined shape during a moulding process. The trim cover is attached to the cushion or the frame or both through an attachment assembly.

Such attachment assemblies exist in numerous variants. Generally, they comprise anchor components secured to the cushion or the underlying seat frame, which the trim cover is fastened to, e.g. by means of hook elements, clamps, straps, or like fastening elements. Examples of attachment assemblies can be found, for instance, in US patent application 2005/0006944 A1, US patent 6,817,675 and US patent 4,865,383.

The areas of a vehicle seat wherein the attachment assemblies are located may be visible or hidden to the seat occupant, the visible variant being the more common one. The attachment areas (called "crimp channels" by some), hereinafter referred to as attachment seams, may be recognisable, in the visible variant, as seam lines or a grooves, defining and separating loosely padded portions of the seat element. In the visible variant, the attachment seams contribute to a large extend to the outer appearance of the seat surface.

It is known that vehicle seats are increasingly equipped with various kinds of sensors and electronic devices, such as occupancy sensors, seat belt buckle sensors, seat heaters, etc. Integration of such devices into the seat is a complex process, in particular because of design constraints based upon haptic or aesthetic criteria. The course of the attachment seams represents a serious constraint for sensors and electronic devices, in particular if these are to be located close to or in the trim cover. The electrode(s) of capacitive sensing systems are preferably located as close as possible to the seat surface in order to ensure a good capacitive coupling between the occupant and the electrode(s). Seat heaters are also preferably located close to the seat surface to avoid long heat-up times. For haptic and aesthetic reasons, the use of textile electrodes is considered advantageous for such devices that are relatively close to the seat surface. The textile electrodes may be arranged in the trim cover, between the trim cover and the cushion or within the cushion in close proximity to the seat surface. It may happen that the electrodes extend across one or more attachment seams. During the lifetime of the vehicle seat, the electrodes are repeatedly subjected to stress, which predominantly occurs perpendicular to the attachment seams. Depending on how the electrodes are fixed to the upholstered element and the configuration of the attachment seam, this may result in that the conductive fibres making up the textile electrode are torn or break in the region of the attachment seam. This causes the resistance of the electrode to increase, which translates into degradation of the performance and ultimately the failure of the concerned device.

### Technical problem

It is an object of the present invention to increase the reliability and lifetime of an electrode integrated in an upholstered seat element of a vehicle seat. This object is achieved by a vehicle seat as claimed in claim 1.

### General Description of the Invention

The upholstered seat element of a vehicle seat includes a cushion, a trim cover fixed to the cushion along an attachment seam and an integrally formed planar textile electrode extending substantially parallel to the trim cover, the textile electrode being formed of interwoven conductive fibres. The electrode comprises a first electrode region arranged on one side of the attachment seam, a second electrode region arranged on the other side of the attachment seam and a transition region connecting the first electrode region to the second electrode region where the electrode overlaps with the attachment seam. According to the invention, the electrode comprises, in the transition region, only such conductive fibres that extend from the transition region into at most one of the first and second electrode regions, so that, in response to stress (such as tensile stress) acting along a direction across the attachment seam (e.g. as an occupant sits down or is seated on the seat), those conductive fibres extending from the transition region only into the first electrode region may be shifted with respect to those conductive fibres extending from the transition region only into the second electrode region, thereby enabling an elongation of the transition region in the direction of the stress. Those skilled will appreciate that the invention is particularly suited when use is made of conductive fibres with little stretching ability (e.g. carbon fibres or metal coated synthetic fibres).

It has been observed that textile electrodes in vehicle seats are for the most part affected by stress occurring perpendicular to attachment seams. The proposed configuration of the transition region causes the textile electrode to better respond to stress (resulting e.g. from geometric change of the upholstered seat element as the the cushion and the trim cover wear out), which results in lesser deterioration and longer lifetime of the electrode. If the electrode is fixed to the trim cover and/or the cushion in its first and second electrode regions, the more stretchable transition region warrants that the electrode is not torn into parts broken or otherwise damaged in case the distance between the fixation points in the first and second electrode regions increases over the seat lifetime. If the electrode is fixed to the trim cover and/or the cushion at the attachment seam, the transition region prevents too high tension building up in the textile electrode between the fixation points and the first and second electrode regions.

The above-mentioned upholstered seat element may be a seat backrest or a seating portion of the vehicle seat.

A woven textile electrode is conventionally cut out or punched out from a woven textile sheet. The orientation of the fibres in the textile electrode is fixed from this process step. According to a first embodiment of the invention, the interwoven fibres include warp fibres and weft fibres, crossing each other at substantially right angle, and the textile electrode is disposed within the upholstered seat element so that the warp fibres or the weft fibres extend across the attachment seam at substantially right angle. The terms "warp" and "weft" are used herein for the sole purpose of distinction between fibres running in a first direction, on the one hand, and fibres running in a second direction substantially perpendicular (i.e. at an angle from about 75° to 90°) to the first direction, on the other hand. In particular, the warp and weft fibres may have the same or different material properties (same or different composition, thickness, cross section, etc.). Advantageously, in the first embodiment, the transition region comprises at least one strip-shaped portion extending at an angle of approximately 45° (i.e. between 30° and 60°, more preferably between 35° and 55°) with respect to the attachment seam. In the strip-shaped portion, the fibres run at an angle of approximately 45° with respect to the strip-shaped portion.

According to a second embodiment of the invention, the textile electrode is disposed within the upholstered seat element so that the warp fibres and the weft fibres extend at angles of approximately 45° with respect to the attachment seam. In the second embodiment, the transition region of the textile electrode advantageously comprises at least one strip-shaped portion substantially perpendicular to the attachment seem.

It shall be noted that one may give the transition region any possible shape, provided that the shape ascertains that the transition region comprises only such conductive fibres that extend from the transition region into at most one of the first and second electrode regions. The transition region may, for instance, be given a meandrous or zigzag shape. Preferably, the width (i.e. the dimension in direction of the attachment seam) of the transition region is comprised in the range from 20 to 80 mm, more preferably in the range from 20 to 60 mm. The length of the transition region (in the direction perpendicular to the attachment seam), i.e. the distance between the first electrode region on the one side of the attachment seam and the second electrode region on the other side thereof, preferably lies in the range from 30 to 120 mm, more preferably in the range from 40 to 100 mm.

### Brief Description of the Drawings

Further details and advantages of the present invention will be apparent from the following detailed description of several not limiting embodiments with reference to the attached drawings, wherein:
Fig. 1 is a exploded schematic view of a textile electrode assembly for use in a capacitive sensing system cross sectional view;
Fig. 2 is cross sectional schematic view of a vehicle seat;
Fig. 3 is an illustration of a conventional textile electrode in a seating portion of a vehicle seat;
Fig. 4 is a schematic drawing of a textile electrode in a seating portion of a vehicle seat according to the invention;
Fig. 5 is a schematic drawing of the textile electrode of Fig. 4 when exposed to tensile stress;
Figs. 6 and 7 are schematic drawings of other textile electrodes for vehicle seats according to the invention.

In the drawings, the same or similar elements have been attributed the same reference numerals.

### Description of Preferred Embodiments

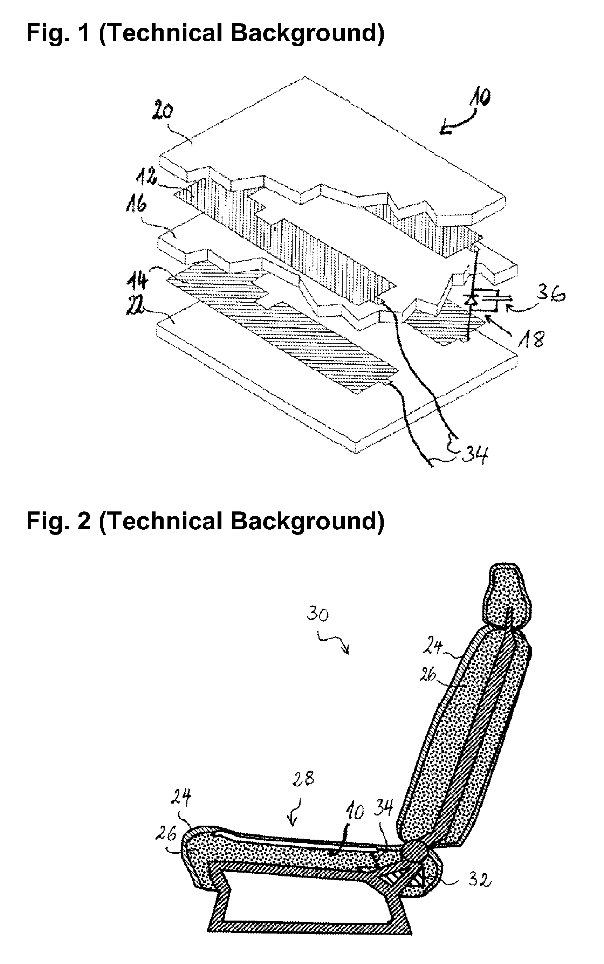

An electrode arrangement 10 of a capacitive occupant detection and/or classification system is shown in Fig. 1. The electrode arrangement 10 is a sandwich structure that comprises a generally planar textile sensing electrode 12, a textile shielding electrode 14 and insulating layer 16 sandwiched by the sensing electrode 12 and the shielding electrode 14. The insulating layer 16 may comprise a plastic sheet but for haptic reasons, it is preferably a textile, such as a knitted, woven or non-woven fabric. Most preferably, the insulating layer 16 comprises a 3D spacer fabric. To further enhance the haptic properties of the electrode arrangement 10, it may be arranged in a felt pocket or, as shown, between two outer fabric layers 20, 22. The electrodes 12, 14 are shown as being generally U-shaped. It should be noted, however, that other shapes are possible and, in some cases even desirable. The shape of the electrodes 12, 14 can be adjusted depending on the seat design, namely the geometry of seam lines and attachment seams.

Fig. 2 shows the electrode arrangement 10 being integrated between the trim cover 24 and the cushion 26 of the seating portion 28 of a vehicle seat 30. The electrodes 12, 14 are substantially parallel to the upper surface of the seating portion 26, with the sensing electrode 12 being closer to that upper surface than the shielding electrode 14.

For occupancy detection, the system carries out a measurement routine, during which a control circuit 32 (e.g. an application-specific integrated circuit), connected to the electrodes 12, 14, applies a sinusoidal oscillating signal to the shielding electrode 16, while it keeps the sensing electrode 12 essentially at the same potential as the shielding electrode 14. If the capacitance between the sensing electrode 12 and chassis ground changes, e.g. because of a passenger on the seat 30, the loading current drawn by the sensing electrode 12 changes. The control circuit 32 measures the current drawn by the sensing electrode 12, and so detects and possibly classifies an occupant on the seat 30. As the shielding electrode 14 is driven with the same voltage as the sensing electrode 12, the sensing electrode 12 is only sensitive into the direction facing away from the shielding electrode 14, i.e. in direction of the upper surface of seating portion 28.

The sensing electrode 12 and the shielding electrode 14 are connected to the control circuit 32 by electric lines 34. Although these are represented in Fig. 1 as separate lines, it is preferable that they are both integrated in a single coaxial cable. In this case, the electric line connected to the sensing electrode 12 corresponds to the core conductor of the coaxial cable while the electric line connected to the shielding electrode 14 corresponds to the conductive sheath of the coaxial cable.

It is also shown in Fig. 1 that a diode 18 and a capacitor 36 are arranged in parallel between the shielding electrode 14 and the sensing electrode 12. During the measurement, the diode 18 is substantially passive, because the electrodes 12, 14 are driven with the same voltage. The capacitor 36 serves to reduce electromagnetic interference (EMI). As an alternative to the capacitor connected in parallel to the diode, a coil could be connected in series with the diode for the reduction of EMI. The diode 18 allows determining circuit interruption and a short circuit between the electrodes 12, 14 by applying a DC voltage between the electrodes.

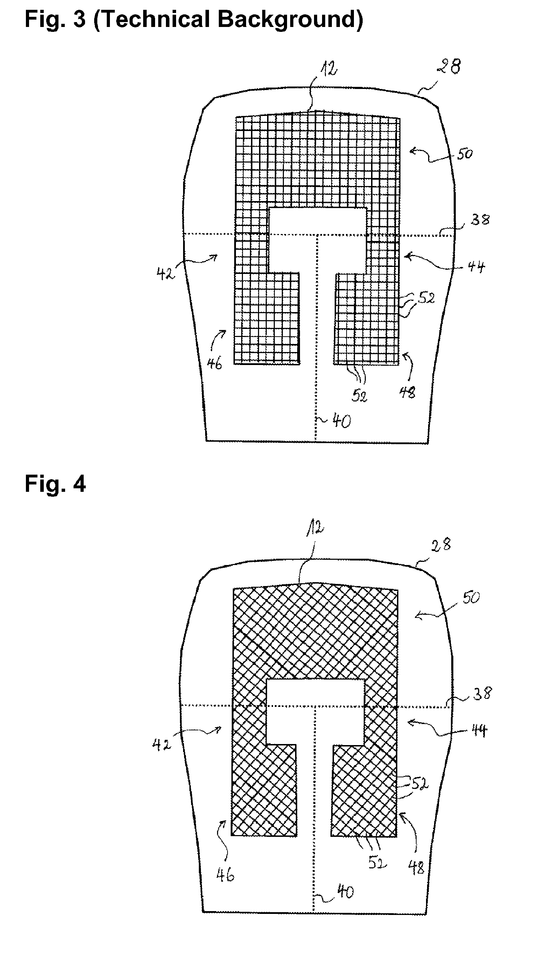

In each one of Figs.3 to 7, only the sensing electrode 12 is represented, respectively. It shall be noted however, that the considerations are also valid for the shielding electrode 14. In an electrode assembly as shown in Fig. 1, preferably both electrodes are formed with a transition region providing for enhanced stretching ability. Alternatively, only one of the sensing and shielding electrodes 12, 14 might be formed with such a transition region. This would preferably be the sensing electrode 12 since this is - as the top electrode - normally subjected to higher stress than the shielding electrode 14.

Each one of the Figs. 3 to 7 shows a generally U-shaped sensing electrode 12 positioned in the seating portion 28 of a vehicle seat. Attachment seams are indicated by reference numerals 38 and 40. Attachment seam 38 crosses the electrode 12 in transition regions 42, 44 between different electrode regions 46, 48, 50 disposed on either side of the attachment seam 38. The electrode 12 consists of a woven sheet made from conductive fibres 52 (e.g. carbon fibres). It shall be noted, in particular, that the density of the conductive fibres 52 in the drawings is not to scale for sake of clarity.

As can be seen, the conventional electrode 12 of Fig. 3 comprises fibres extending from the transition regions 42, 46 into more than one of the adjacent electrode regions 46, 48 and 50. In particular, the electrode comprises fibres 52 running from electrode region 46 (respectively 48), through transition region 42 (respectively 44), into electrode region 50. The conductive fibres being only little expandable, the stretching ability of the electrode 12 of Fig. 3 transversally to the attachment seam 38 is poor. Accordingly, the electrode is susceptible to tearing when subjected to tensile stress in this direction.

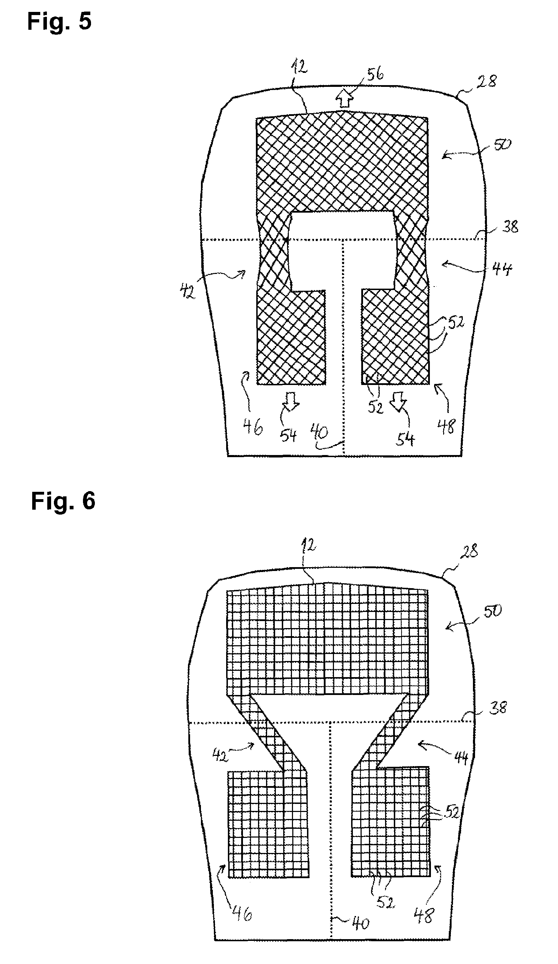

Figs 4 and 5 show an embodiment of a seating portion 28 with an electrode 12 able to react to tensile strength by a length variation. The outer contour of the electrode 12 of Figs. 4 and 5 corresponds to the outer contour of the electrode of Fig. 3. However, the orientation of the conductive fibres 52 is different, since they now run at an angle of +45° or -45° with respect to the attachment seam 38 that crosses the electrode 12.

As a result, the conductive fibres of the essentially strip-shaped transition regions 42, 44 extend at most into one of the adjacent electrode regions 46, 48 and 50. Accordingly, those conductive fibres extending from the transition region 42 (respectively 44) only into electrode region 50 may be shifted with respect to those conductive fibres extending from transition region 42 (respectively 44) only into electrode region 46 (respectively 48), thereby enabling an elongation of the transition region in the direction transversal to the attachment seam 38. Fig. 5 illustrates the elongation of the transition regions 42, 44 as the electrode 12 is subjected to stress (indicated as arrows 54 and 56) acting transversally with respect to the attachment seam 38. Since the conductive fibres 52 essentially keep their length, the effect of elongation is caused by the bending and the reorientation of the individual conductive fibres 52 in the transition regions 42, 44. In particular, the individual conductive fibres become oriented more into the direction of the tensile stress.

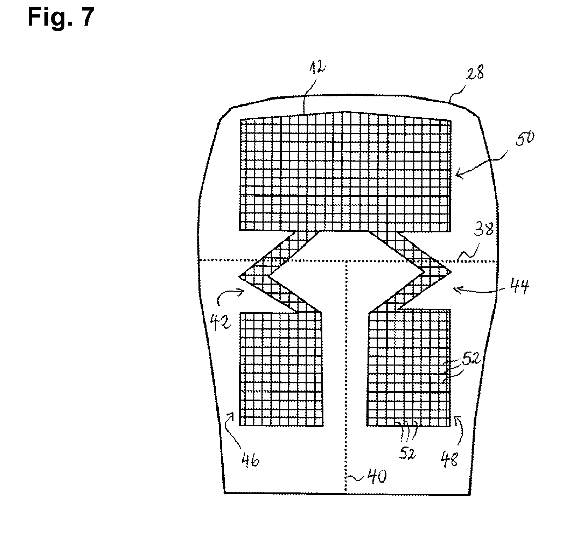

Figs 6 and 7 show alternative embodiments of textile woven electrodes 12 for a vehicle seat. The fibres 52 are oriented as in Fig. 3. However, the transition regions 42, 44 have been given a shape that ascertains that the conductive fibres of the transition regions do not extend into more than one of the neighbouring electrode regions 46, 48 and 50. In Fig. 6, the transition regions 42, 44 have the shape of a strip extending at an angle of about 45° with respect to the attachment seam 38. In Fig. 7, the transition regions 42, 44 are zigzag-shaped. The elongation of the transition regions in response to stress applied across the attachment seam 38 occurs in similar manner as described with respect to Fig. 5 (apart from the direction of reorientation of the fibres).

## Claims

1. A vehicle seat comprising an upholstered seat element, said upholstered seat element including
a cushion;
a trim cover fixed to said cushion along an attachment seam; and
an integrally formed planar textile electrode extending substantially parallel to said trim cover, said textile electrode being formed of interwoven conductive fibres and comprising a first electrode region arranged on one side of said attachment seam, a second electrode region arranged on the other side of said attachment seam and a transition region extending from said first electrode region to said second electrode region, across said attachment seam;
wherein said textile electrode comprises, in said transition region, only such conductive fibres that extend from said transition region into at most one of said first and second electrode regions, in such a way that, in response to stress acting along a direction across said attachment seam, those conductive fibres extending from said transition region only into said first electrode region may be shifted with respect to those conductive fibres extending from said transition region only into said second electrode region, thereby enabling an elongation of said transition region in the direction of said stress.

2. The vehicle seat as claimed in claim 1, wherein said upholstered seat element is a seating portion of said vehicle seat.

3. The vehicle seat as claimed in claim 1, wherein said upholstered seat element is a backrest of said vehicle seat.

4. The vehicle seat as claimed in any one of claims 1 to 3, wherein said interwoven fibres include warp fibres and weft fibres, crossing each other at substantially right angle, and wherein said textile electrode is disposed within said upholstered seat element so that said warp fibres or said weft fibres extend across said attachment seam at substantially right angle.

5. The vehicle seat as claimed in claim 4, wherein said transition region comprises at least one strip-shaped portion extending at an angle of approximately 45° with respect to said attachment seem.

6. The vehicle seat as claimed in any one of claims 1 to 3, wherein said interwoven fibres include warp fibres and weft fibres, crossing each other at substantially right angle, and wherein said textile electrode is disposed within said upholstered seat element so that said warp fibres and said weft fibres extend at an angle of approximately 45° with respect to said attachment seam.

7. The vehicle seat as claimed in claim 6, wherein said transition region of said textile electrode comprises at least one strip-shaped portion substantially perpendicular to said attachment seem.

8. The vehicle seat as claimed in any one of claims 1 to 7, wherein said transition region of said textile electrode comprises a meandrous portion.

9. The vehicle seat as claimed in any one of claims 1 to 8, wherein said textile electrode is fixed to said trim cover and/or said cushion in said first and second electrode regions.

10. The vehicle seat as claimed in any one of claims 1 to 9, wherein said textile electrode is fixed to said trim cover and/or said cushion at said attachment seam.
